# DEMANDE DE BREVET EUROPEEN

(11) **EP 0 890 334 A2**
(43) Date de publication de la demande: **13.01.1999**
(21) Numéro de dépôt: 98401709.5
(22) Date de dépôt: 06.07.1998
(51) Int. Cl.: A47J 43/28

(54) **Ustensile pour manipuler des aliments en tranches**

(30) Priorité: 11.07.1997 FR 9709384
(71) Demandeur: Société Progexion SA, 92500 Rueil Malmaison (FR)
(72) Inventeur: Gex, Hervé, 92500 Rueil Malmaison (FR)
(74) Mandataire: Wagret, Frédéric

(57) **Abrégé**

Ustensile destiné à la manipulation d'aliments en tranches, comprenant d'une part un manche susceptible d'être tenu à la main par l'opérateur, et d'autre part une partie active sous la forme d'une lame sensiblement plane disposée dans le prolongement dudit manche, caractérisé en ce qu'il comprend en outre une contre-lame disposée sensiblement en regard de et parallèle à ladite lame, de manière à définir un espace entre les plans respectifs de la lame et la contre-lame apte à recevoir ladite tranche dans son épaisseur et au moins une partie de sa largeur (transversalement à l'axe longitudinal de l'ustensile), la lame étant apte à soulever et/ou supporter ladite tranche sans l'abîmer. De préférence, la lame et la contre-lame sont séparées d'une distance sensiblement constante, entre 1 et 10 mm, et de préférence entre 2 et 5 mm; la contre-lame est de longueur légèrement inférieure à celle de la lame.

## Description

La présente invention concerne un ustensile manuel destiné à manipuler et notamment soulever, sans les abîmer, enrouler, transporter et/ou déposer des tranches prédécoupées d'aliment, par exemple de fines tranches de poisson (saumon).

On a vu apparaître sur le marché des produits prêts à consommer et présentés sous une forme telle que le consommateur ait le moins d'effort possible à fournir avant de les servir. Ainsi, certains aliments sont présentés sous forme de fines tranches prédécoupées, généralement conditionnés sous vide, et de ce fait, les tranches adhèrent les unes aux autres et sont difficiles à séparer, surtout lorsqu'il n'y a pas d'intercalaire entre les tranches. On cite à titre d'exemple des tranches de saumon fumé, de magret de canard ou encore de jambon.

Ces produits sont généralement des produits de luxe et un des soucis du consommateur est d'obtenir que leur présentation finale dans le plat ou l'assiette, soit irréprochable. Ces produits sont plus agréables à consommer lorsqu'ils sont sous forme de tranches très fines. Toutefois, la finesse et la relative irrégularité de découpe de forme de ces tranches, ont pour en conséquence leur fragilité, et donc une certaine difficulté pour l'opérateur, que ce soit un vendeur ou le consommateur, à les individualiser puis à les soulever afin de les poser, soit dans le paquet destiné à être emporté, soit dans le plat ou l'assiette de présentation. Par ailleurs, les contraintes d'hygiène obligent à éviter tout contact entre l'aliment et les mains de l'opérateur.

La présente invention remédie à ces inconvénients et propose un ustensile manuel qui permette à l'opérateur de séparer, soulever, enrouler, transporter et/ou déposer des aliments en tranches (notamment des tranches fines), par exemple conditionnées sous vide sans intercalaire, sans les détériorer et en évitant tout contact physique avec elles.

À cette fin, selon l'invention, l'ustensile destiné à la manipulation d'aliments en tranches, comprenant d'une part un manche susceptible d'être tenu à la main par l'opérateur, et d'autre part une partie active sous la forme d'une lame sensiblement plane disposée dans le prolongement dudit manche, est caractérisé en ce qu'il comprend en outre une contre-lame disposée sensiblement en regard de et parallèle à ladite lame, de manière à définir un espace entre les plans respectifs de la lame et la contre-lame apte à recevoir ladite tranche dans son épaisseur et au moins une partie de sa largeur (transversalement à l'axe longitudinal de l'ustensile), la lame étant apte à soulever et/ou supporter ladite tranche sans l'abîmer.

La lame et la contre-lame sont séparées d'une distance sensiblement constante, entre 1 et 10 mm, et de préférence entre 2 et 4 mm.

De préférence, la contre-lame est de longueur (comprise entre 95 et 195 mm) légèrement inférieure à celle de la lame (entre 100 et 200 mm, de préférence de l'ordre de 160 mm).

La face de la lame tournée vers la contre-lame présente une concavité, dans le sens de la longueur, tournée vers ladite contre-lame.

La face de la contre-lame tournée vers la lame présente une concavité, dans le sens de la longueur, tournée vers ladite lame.

La contre-lame présente une largeur (comprise entre 4 et 35 mm) légèrement inférieure à celle de la lame (comprise entre 5 et 40 mm).

L'épaisseur de la lame est sensiblement constante, et comprise entre 1 et 10 mm, de préférence de l'ordre de 2 à 4 mm.

Avantageusement, les bords de la lame (respectivement de la contre-lame) ne sont ni coupant, ni tranchant, et son extrémité est effilée mais pas pointue ni acérée.

La lame et/ou la contre-lame est/sont en matière plastique et/ou en métal (tel que l'acier inoxydable).

Selon un mode préféré de réalisation, l'ustensile est réalisé en un seul bloc.

L'invention sera bien comprise à la lumière de la description qui suit se rapportant à un exemple illustratif mais non limitatif, en référence aux dessins annexés dans lesquels:
La figure 1 est une vue de côté de l'ustensile;
La figure 2 est une vue de dessus de l'ustensile;
La figure 3 est une vue en coupe transversale du manche;
La figure 4 est une vue en coupe transversale de la lame et de la contre-lame; et
Les figures 5A, 5B et 5C sont des schémas illustrant les étapes d'utilisation de l'ustensile.

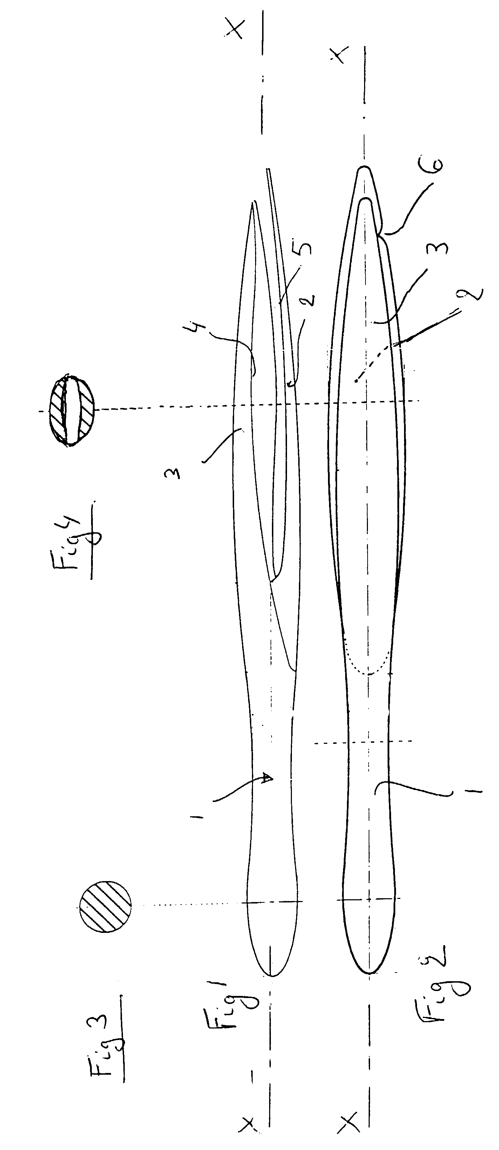

En référence à la figure 1, on a représenté en vue de côté l'ustensile de l'invention, de forme longiligne selon un axe longitudinal X-X. On entend par longueur, la direction parallèle à l'axe X-X, et par largeur la direction transversale audit axe.

Il comprend une première partie en forme de manche 1 susceptible d'être tenu par la main d'un opérateur, et une seconde partie comprenant une lame 2, située dans le prolongement du manche 1. En regard de et sensiblement parallèlement à la lame 2, est prévue une contre-lame 3.

La lame 2 et la contre-lame 3 définissent chacune une surface sensiblement plane, respectivement 4 et 5, se faisant face et séparées d'une distance sensiblement constante, entre 1 et 10 mm, de préférence 2 et 4 mm.

La lame 2 est incurvée, c'est-à-dire qu'elle présente une concavité tournée vers la contre-lame 3, dans le sens de la longueur (la lame en quelque sorte remonte du côté de son extrémité distale vers la contre-lame). De même, la contre-lame 3 présente une concavité tournée vers la lame 2, dans le sens de la longueur.

Par ailleurs, comme montré sur la figure 4 en coupe transversale, la lame présente une légère concavité dans le sens de sa largeur, c'est-à-dire transversalement. Il en est de même de la contre-lame.

Comme mieux montré sur la figure 2, en vue de dessus, la contre-lame 3, en quelque sorte surmontant ladite lame 2, est de dimension légèrement inférieure en largeur et en longueur par rapport à la lame. La lame et la contre-lame présentent toutes les deux une forme allongée, dont les bords latéraux sont courbes ; les bords se rapprochent vers l'extrémité distale (la plus éloignée du manche) pour former une pointe effilée.

La pointe de la lame, et également de la contre-lame, n'est pas pointue ni acérée. De même, les bords de la lame, et également de la contre-lame, ne sont pas coupants ni tranchants.

Comme montré sur la figure 3, le manche présente une section droite circulaire, d'un diamètre sensiblement constant (de l'ordre de ........... mm), et de préférence de section progressivement amincie vers l'extrémité proximale.

Il est prévu sur un bord de la lame 2, vers son extrémité distale (figure 2), une encoche 6, de petite taille (0,5 à 2 mm).

Les matériaux constitutifs du manche, de la lame et de la contre-lame sont par exemple le bois, la corne, la matière plastique, le métal (acier inoxydable), ou toute combinaison des matériaux.

L'ustensile peut être réalisé, soit d'un seul bloc (ce qui présente l'avantage de rigidifier l'ustensile), soit en plusieurs parties (manche, lame, contre-lame) assemblées.

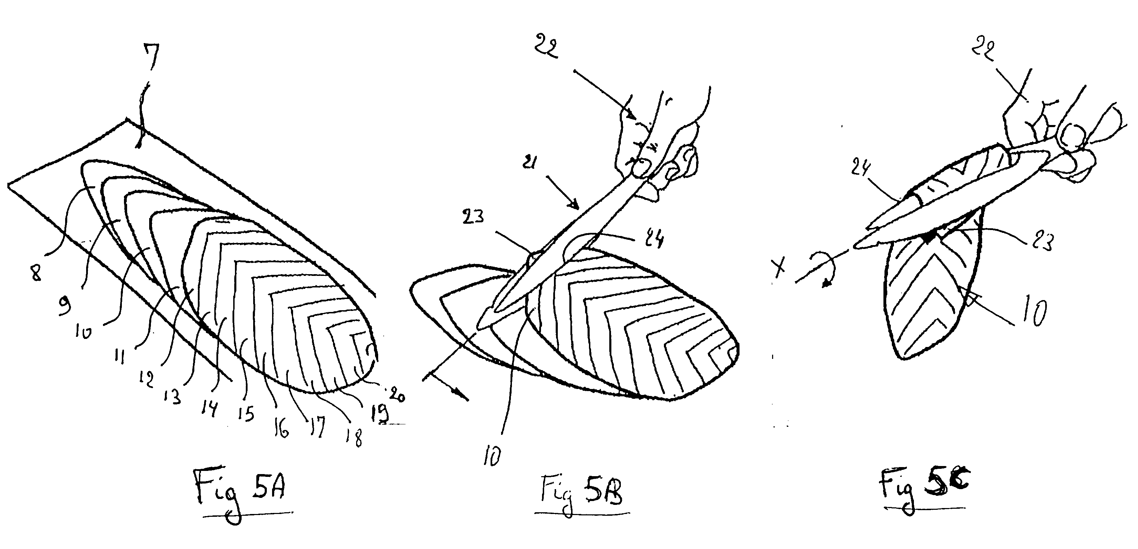

L'utilisation de l'ustensile est décrite ci-après en référence aux figures 5A, 5B et 5C.

La figure 5A montre en perspective schématique un support plan 7 (par exemple en carton) sur lequel sont disposées en recouvrement partiel des tranches de saumon fumé 8 à 20, sans intercalaire, de manière connue en soi.

La figure 5B montre l'ustensile 21 tenu par la main 22 de l'opérateur, l'ustensile étant approché des tranches de manière que la lame et la contre-lame soient dirigées vers les tranches et sensiblement parallèles à ces dernières.

L'opérateur glisse la lame sous la tranche choisie sur toute la largeur de celle-ci, jusqu'à ce que la tranche 10 repose par sa largeur sur la lame. La contre-lame se trouve au-dessus de la dite tranche et cette dernière est alors située dans l'espace séparant la lame de la contre-lame.

L'opérateur soulève la tranche 10 qui repose sur la lame par son extrémité 23; quasi simultanément, l'opérateur effectue avec l'ustensile un mouvement de rotation (dans le sens de la flèche "f" de la figure 5C) autour de son axe longitudinal X-X. Ainsi, la contre-lame qui surplombait la tranche 10, porte alors par son bord latéral 24 contre la tranche 10. Au fur et à mesure que le mouvement de rotation se poursuit, la tranche 10 s'enroule au moins partiellement autour de la contre-lame, tandis que le bord d'extrémité 23 de la tranche 10 porte contre la lame. Le mouvement de rotation de l'ustensile autour de son axe est avantageusement accompagné d'un mouvement de soulèvement de l'ustensile (dans le sens de l'éloignement des tranches), ce qui provoque le détachement de la tranche 10 des autres tranches.

L'effet conjugué du frottement de la tranche sur la lame et la contre-lame permet le maintien de la tanche sur l'ustensile.
L'opérateur déplace ensuite l'ustensile portant la tranche jusqu'à sa destination, par exemple une assiette (non représentée) et en effectuant un mouvement de rotation inverse, déroule la tranche qui peut alors être déposée délicatement.

La longueur de la lame est légèrement supérieure à la largeur d'une tranche d'aliment, pour assurer le soulèvement de la tranche sur l'ustensile sans endommagement.

De même, la longueur de la contre-lame étant sensiblement égale (légèrement inférieure) à celle de la lame, la tranche choisie une fois soulevée (figure 5B) s'enroule sur la contre-lame (figure 5D) selon une surface sensiblement équivalente, évitant alors tout endommagement de la tranche.

De préférence, la face de la contre-lame opposée à la lame est bombée suivant sa largeur pour assurer une surface de contact maximale entre la tranche d'aliment et la contre-lame, et donc le maintien de celle-ci par frottement (figure 5C).

Le fait que la lame soit légèrement remontante (vers la contre-lame) à son extrémité facilite l'introduction de la lame entre la tranche choisie et la tranche voisine.

L'absence de bord tranchant et d'extrémité pointue (lame et contre-lame) évite toute détérioration ou endommagement de la tranche.

Le fait que la longueur de la lame soit supérieure à celle de la contre-lame permet le soulèvement et le détachement aisés de la tranche choisie des autres tranches

La largeur de la lame est déterminée de façon à créer une surface de contact et de support suffisante pour supporter et maintenir la tranche sans l'endommager, notamment au niveau des bords de la lame au contact avec la tanche.

On comprend que l'ustensile de l'invention permet le détachement, la manipulation, le déplacement, et la dépose d'aliment en tranches fines, sans difficulté, ni que les tranches soient abîmées, et sans contact de l'opérateur avec celles-ci.

## Revendications

1. Ustensile destiné à la manipulation d'aliments en tranches, comprenant d'une part un manche susceptible d'être tenu à la main par l'opérateur, et d'autre part une partie active sous la forme d'une lame sensiblement plane disposée dans le prolongement dudit manche, caractérisé en ce qu'il comprend en outre une contre-lame disposée sensiblement en regard de et parallèle à ladite lame, de manière à définir un espace entre les plans respectifs de la lame et la contre-lame apte à recevoir ladite tranche dans son épaisseur et au moins une partie de sa largeur (transversalement à l'axe longitudinal de l'ustensile), la lame étant apte à soulever et/ou supporter ladite tranche sans l'abîmer.

2. Ustensile selon la revendication 1, caractérisé en ce que la lame et la contre-lame sont séparées d'une distance sensiblement constante, entre 1 et 10 mm, et de préférence entre 2 et 5 mm.

3. Ustensile selon l'une des revendications 1 ou 2, caractérisé en ce que la contre-lame est de longueur légèrement inférieure à celle de la lame.

4. Ustensile selon l'une des revendications 1 à 3, caractérisé en ce que la face de la lame tournée vers la contre-lame présente une concavité, dans le sens de la longueur, tournée vers ladite contre-lame.

5. Ustensile selon l'une des revendications 1 à 4, caractérisé en ce que la face de la contre-lame tournée vers la lame présente une concavité, dans le sens de la longueur, tournée vers ladite lame.

6. Ustensile selon l'une des revendications 1 à 5, caractérisé en ce que la contre-lame présente une largeur légèrement inférieure à celle de la lame.

7. Ustensile selon l'une des revendications 1 à 6, caractérisé en ce que l'épaisseur de la lame est sensiblement constante, et comprise entre 1 et 10 mm, de préférence de l'ordre de 2 à 4 mm.

8. Ustensile selon l'une des revendications 1 à 7, caractérisé en ce que les bords de la lame (respectivement de la contre-lame) ne sont ni coupant, ni tranchant, et son extrémité est effilée mais pas pointue.

9. Ustensile selon l'une des revendications 1 à 9, caractérisé en ce qu'il est réalisé en bois, corne, matière plastique, métal, ou toute combinaison de ces matériaux.

10. Ustensile selon l'une des revendications 1 à 9, caractérisé en ce qu'il est réalisé en un seul bloc.
